(19) Europäisches Patentamt
European Patent Office
Office européen des brevets

(11) EP 4 768 634 A1

(12) EUROPEAN PATENT APPLICATION
published in accordance with Art. 153(4) EPC

(43) Date of publication:
01.07.2026 Bulletin 2026/27

(21) Application number: 24856123.5

(22) Date of filing: 20.06.2024

(51) International Patent Classification (IPC):
C25B 15/02 (2021.01)    C01B 3/02 (2026.01)
C25B 1/04 (2021.01)    C25B 9/00 (2021.01)
C25B 9/70 (2021.01)    H02J 3/14 (2026.01)
H02J 3/24 (2006.01)    H02J 3/28 (2026.01)
H02J 15/00 (2026.01)

(52) Cooperative Patent Classification (CPC):
C01B 3/02; C25B 1/04; C25B 9/00; C25B 9/70;
C25B 15/02; H02J 3/0014; H02J 3/14; H02J 3/28;
H02J 15/00; Y02E 60/36

(86) International application number:
PCT/JP2024/022390

(87) International publication number:
WO 2025/041428 (27.02.2025 Gazette 2025/09)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 23.08.2023 JP 2023135675

(71) Applicant: Hitachi, Ltd.
Tokyo 100-8280 (JP)

(72) Inventors:
• GUNJI, Akira
  Tokyo 100-8280 (JP)
• MIZUKAMI, Takaaki
  Tokyo 100-8280 (JP)
• ITO, Tomomichi
  Tokyo 100-8280 (JP)
• WATANABE, Keiji
  Tokyo 100-8280 (JP)

(74) Representative: Mewburn Ellis LLP
Aurora Building
Counterslip
Bristol BS1 6BX (GB)

(54) **WATER ELECTROLYSIS SYSTEM AND WATER ELECTROLYSIS SYSTEM CONTROL DEVICE**

(57)    In a water electrolysis system that changes a power consumption by detecting a grid frequency in order to rapidly change the power consumption, deterioration and breakdown of the electrolyzer are suppressed by calculating an appropriate adjustment margin that allows an electrolyzer to instantaneously respond. The water electrolysis system includes: a rectifier that converts an AC power from a power grid to a DC power; an electrolyzer that performs a water electrolysis with the DC power from the rectifier; a gas-liquid separator that separates the oxygen and the hydrogen from a mixed fluid of oxygen and water from the electrolyzer; and a cooling system that supplies water to the electrolyzer. The rectifier is controlled so as to adjust power consumption according to a frequency of the power grid, and the power consumption is adjusted so as to fall within a limit range of the power consumption in the electrolyzer, and the limit range of the power consumption is determined on the basis of a temperature of the electrolyzer, a deterioration rate thereof, a water pressure in an electrolyzer outlet, and a flow rate of supply water.

FIG. 1

## Description

### Technical Field

The present invention relates to a water electrolysis system that detects a grid frequency and changes a power consumption and to a water electrolysis system control device.

### Background Art

Compared to a fossil fuel, hydrogen is clean energy that does not emit carbon dioxide when burned. Accordingly, hydrogen is gaining attention as one of clean energies for global warming countermeasures, and technical development related to production/transportation/use of hydrogen has been advanced. As a method for producing hydrogen, a water electrolysis system is known.

In order to produce clean hydrogen, as an energy source thereof, renewable energy is required. Renewable energy, such as solar power or wind power, has significant fluctuations in the amount of power generated over time and, when the amount of the generated power increases, an adjustment capability for adjusting the balance between power supply and demand is required. Accordingly, it has been proposed to adjust the amount of power consumption of the water electrolysis system to provide the adjustment capability.

Patent Literature 1 describes an output control device that controls an output of an electrolysis device within the range of a rated output or a maximum output on the basis of a command to adjust power demand over a time period of about 2 to 3 minutes to several hours or on the basis of a change in grid frequency to adjust power demand over a time period of about several seconds to several tens of seconds.

Patent Literature 2 describes a hydrogen supply system, a hydrogen station, and a hydrogen supply/demand management method, in which an amount of power consumption of an electrolysis device is adjusted on the basis of a command to adjust the power supply and demand of a commercial power network, and an amount of the adjustment is determined on the basis of an adjustment margin calculated from differences between maximum/minimum ratings of the electrolysis device and a current operating output or the like, an amount of remaining hydrogen, a future supply-demand balance, and the like.

### Citation List

### Patent Literature

Patent Literature 1: Japanese Unexamined Patent Application Publication No. 2011-50138
Patent Literature 2: Japanese Unexamined Patent Application Publication No. 2021-134863

### Summary of Invention

### Technical Problem

In each of the hydrogen supply systems described in Patent Literature 1 and Patent Literature 2, when a relatively long-period adjustment capability that adjusts the power consumption after receiving the power command is to be provided, it is possible to change the flow rate of water to an electrolyzer for the adjustment of the power consumption to follow the change in power consumption. Meanwhile, in short-period adjustment, it becomes difficult to cause the water flow rate change and the water temperature control to follow the rapid power consumption change, and consequently, when the adjustment margin is calculated from the differences between the maximum/minimum ratings of the eletrolyzer and the current operating output or the like and the power consumption is changed, an abnormal temperature distribution or current distribution may occur inside an electrolytic stack to result in deterioration or breakdown. Otherwise, it may be possible that a mixed fluid of gas and water coming from the eletrolyzer deviates from an appropriate gas-liquid ratio, and cannot sufficiently be separated using a gas-liquid separator.

It is therefore an object of the present invention to calculate, in a water electrolysis system that detects a grid frequency in order to rapidly change power consumption, and changes the power consumption, an appropriate adjustment margin that allows an electrolyzer to instantaneously respond, and thereby suppress deterioration and breakdown of the electrolyzer.

In addition, it is another object of the present invention to suppress, in a system in which a plurality of electrolyzers are electrically connected in series and parallel and power consumption of each of the electrolyzers cannot individually be controlled also, deterioration and breakdown of an electrolysis device due to a rapid power consumption change.

**Solution to Problem**

From the above, in the present invention, "a water electrolysis system includes: a rectifier that converts an AC power from a power grid to a DC power; an electrolyzer that performs a water electrolysis with the DC power from the rectifier; a gas-liquid separator that separates the oxygen and the hydrogen from a mixed fluid of oxygen and water from the electrolyzer; and a cooling system that supplies water to the electrolyzer. The rectifier is controlled so as to adjust a power consumption according to a frequency of the power grid, and the power consumption is adjusted so as to fall within a limit range of the power consumption in the electrolyzer, and the limit range of the power consumption is determined on the basis of a temperature of the electrolyzer, a deterioration rate thereof, a water pressure in an electrolyzer outlet, and a flow rate of a supply water."

Further, in the present invention, "a water electrolysis system control device includes: a rectifier that converts an AC power from a power grid to a DC power; an electrolyzer that performs a water electrolysis with the DC power from the rectifier; a gas-liquid separator that separates the oxygen and hydrogen from a mixed fluid of oxygen and water from the electrolyzer; and a cooling system that supplies water to the electrolyzer. The water electrolysis system control device controls the rectifier so as to adjust power consumption according to a frequency of the power grid, and the power consumption is adjusted so as to fall within a limit range of the power consumption in the electrolyzer, and the limit range of the power consumption is determined on the basis of a temperature of the electrolyzer, a deterioration rate thereof, a water pressure in an electrolyzer outlet, and a flow rate of a supply water."

**Advantageous Effects of Invention**

According to the present invention, a power consumption adjustment margin is determined in consideration of the flow rate of the water to the electrolyzer. Consequently, an abnormal temperature distribution or current distribution does not occur, and it is possible to suppress deterioration and breakdown of the electrolyzer.

In addition, in a water electrolysis system according to another embodiment, a system adjustment margin is determined so as to fall within the range of the adjustment margin in each of the electrolyzers which are electrically connected in series and parallel. Consequently, an abnormal temperature distribution or current distribution does not occur in any of the electrolyzers, and it is possible to suppress the deterioration and breakdown of the electrolyzer.

Further features related to the present invention becomes apparent from description of the specification and accompanying drawings. Objects, configurations, and effects other than the above will be apparent from the description of the following embodiments.

**Brief Description of Drawings**

Fig. 1 is an overview diagram illustrating an example of the entire configuration of a water electrolysis system according to a first embodiment of the present invention.

Fig. 2 is an overview diagram illustrating an example of a configuration of a power control command unit 21 according to the first embodiment of the present invention.

Fig. 3 is a diagram illustrating an example of a power consumption setting command according to an AC frequency.

Fig. 4 is a diagram illustrating an example of the power consumption setting command according to the AC frequency.

Fig. 5 is an overview diagram illustrating an example of the entire configuration of a water electrolysis system according to a second embodiment of the present invention.

FIG. 6 is an overview diagram illustrating an example of a configuration of a power control command unit 21 according to the second embodiment of the present invention.

Fig. 7 is a diagram illustrating a current-voltage characteristic of an electrolyzer that has been calculated on the basis of an internal resistance change rate.

Fig. 8 is a diagram illustrating relationships between power consumption and a current density, a heat generation amount, and a cell voltage.

Fig. 9 is a diagram illustrating relationships between the power consumption and the current density, the heat generation amount, and the cell voltage.

Fig. 10 is a diagram illustrating an electric connection circuit and electrolyzer numbers of electrolyzers 3a.

Fig. 11 is a diagram illustrating a relationship between the current density and a cell average voltage for each of the twelve electrolyzers.

Fig. 12 is a diagram illustrating a relationship between a system current density and the cell voltage of each of the electrolyzers 3a.

Fig. 13 is a diagram illustrating a relationship between the system current density and a current in each of the electrolyzers 3a.

Fig. 14 is a diagram illustrating a relationship between the system current density and a heat generation amount of each of the electrolyzers 3a.

Fig. 15 is a diagram illustrating an example of a heat-generation-amount upper limit, a current density upper limit, and system power consumption upper and lower limits.

Fig. 16 is a diagram illustrating an example of the current density upper and lower limits and the system power consumption of the electrolyzer.

Fig. 17 is a diagram illustrating an example of the heat-generation-amount upper limit, the current density upper limit, and the system power consumption.

## Description of Embodiments

Hereinbelow, modes for carrying out the present invention will be described with reference to the drawings. Note that identical components are denoted by identical reference signs and, when a description is repetitive, the description may be omitted. In addition, the present invention is not limited to the following modes and embodiments.

Before describing the embodiments of the present invention, the prerequisites for a water electrolysis system will be summarized below.

First, electrolyzers to be used in the water electrolysis system include an alkali type, a solid polymer type, an anion-exchange membrane type, and the like. The present invention is applicable to an electrolyzer of any type, but the solid polymer type with excellent output responsiveness will be shown by way of example.

An efficiency of energy conversion from power to hydrogen in a typical electrolyzer is about 70 to 90 %, and the remainder of the power becomes heat, which heats constituent members of the electrolyzer and water flowing in the inside thereof. Accordingly, from upstream to downstream in a water flow path, a temperature increases, and a temperature distribution occurs in the electrolyzer.

In addition, when fluctuations occur in a water flow rate in the electrolyzer, the temperature is higher in a lower flow-rate region, and a temperature distribution occurs. As the temperature of an electrolytic cell of the electrolyzer is higher, the resistance thereof is lower. However, when the temperature exceeds a heat resistance temperature of 60 to 100 °C, deterioration of an electrolyte membrane included in the electrolytic cell and an electrode catalyst progresses to increase the resistance, the electrolyte membrane that separates hydrogen and oxygen thins to increase an amount of permeation of hydrogen and oxygen, develop a hole, or incur an electrical short circuit.

Meanwhile, as a temperature difference increases in the electrolytic cell, a resistance difference in the electrolytic cell increases, and a current concentrates on a high-temperature portion.

In a flow path of the electrolytic cell, when a volume ratio of generated gas to water serving as a reaction raw material is low, due to insufficient water supply to an electrode, the resistance increases, and the current concentrates on a region where the volume ratio of the gas is low. Such current concentration results in a local temperature rise to cause deterioration or breakdown.

Therefore, it is important to suppress occurrence of a temperature difference and a high-gas-volume-ratio region in the electrolytic cell.

Most of the heat generated in the eletrolyzer is carried away by the supplied water to the outside of the electrolyzer, and a temperature difference occurred in a water flow path direction inside the electrolyzer is proportional to a heat generation amount in the electrolyzer, while being inversely proportional to the water flow rate. Meanwhile, a gas generation amount is proportional to a current and, as a current value is higher, the gas volume ratio in a flow rate outlet is higher.

Therefore, in order to suppress the occurrence of the temperature difference and the high-gas-volume-ration region in the electrolytic cell, it is important to supply sufficient water in accordance with the current in the electrolyzer and an output thereof.

## First Embodiment

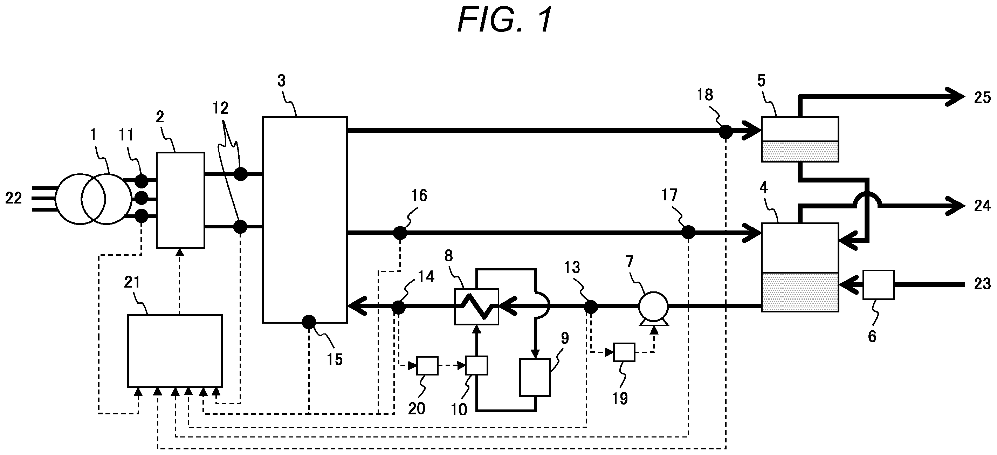

Fig. 1 illustrates an example of a configuration of a water electrolysis system according to the first embodiment of the present invention. The water electrolysis system is configured to include a main system and a control system that controls the main system.

It can be said that the main system is configured to include an insulation transformer 1 that adjusts a voltage from a grid power 22 and insulates a water electrolysis system side from a grid side, a rectifier 2 that converts AC power to DC power, an electrolyzer 3 that performs water electrolysis with the DC power from the rectifier 2, an oxygen-side gas-liquid separator 4 that performs gas-liquid separation of oxygen 24 from a mixed fluid of oxygen and water from the electrolyzer 3, a hydrogen-side gas-liquid separator 5 that performs gas-liquid separation of hydrogen 25 from a mixed fluid of hydrogen and water from the electrolyzer 3, a pure water production device 6 that purifies water 23, a pump 7 that supplies the pure water to the electrolyzer 3, a heat exchanger 8 that cools the pure water, a cooler 9 that supplies cooling water to the heat exchanger 8, a cooling water adjustment valve 10 that adjusts the flow rate of the cooling water to the heat exchanger 8, and the like.

Meanwhile, it can be said that the control system that controls the main system is configured to have an AC power detection unit 11 that detects an AC voltage, an AC current, and an AC frequency, a DC power detection unit 12 that detects a DC current and a DC voltage to the electrolyzer, a flow meter 13 that detects the flow rate of water to the electrolyzer 3, a water inlet thermometer 14 that detects a water temperature in an eletrolyzer inlet, an electrolyzer thermometer 15 that detects an electrolyzer temperature, a water outlet thermometer 16 that detects a water temperature in an electrolyzer outlet, a water outlet pressure meter 17 that detects a pressure on a water outlet side of the electrolyzer 3, a hydrogen pressure meter 18 that detects a hydrogen pressure, a water flow rate control unit 19 that controls the flow rate of water to the electrolyzer 3, a water temperature control unit 20 that controls the water temperature in the eletrolyzer inlet, and a power control command unit 21 that determines power consumption in the water electrolysis system.

Note that it may also be possible to remove the electrolyzer thermometer 15 and the water outlet thermometer 16, and estimate the water temperature on the basis of the DC current and voltage detected by the water inlet thermometer 14 and the DC power detection unit 12. The heat exchanger 8 may be disposed at a different position, or may also be added. It may also be possible to add another device such as a purifier for pure water, a tank therefor, a pressure control valve, a hydrogen drier, or a booster.

In the main system configuration of the water electrolysis system in Fig. 1, water having the flow rate and temperature thereof controlled with the pump 7 and the heat exchanger 8 is supplied to the electrolyzer 3, and the DC current supplied from the rectifier 2 causes electrolyzation of water to generate hydrogen and oxygen. Each of hydrogen and oxygen generated is discharged together with water from the electrolyzer 3. Oxygen is separated with the oxygen-side gas-liquid separator 4 to be discharged from the system. Hydrogen is separated with the hydrogen-side gas-liquid separator 5 to be discharged from the system. Water separated with the gas-liquid separators 4 and 5 is re-used as supply water to the electrolyzer 3. Water (replenishment water) corresponding to the water consumed in a series of processes is supplied from the pure water production device 6.

To the power control command unit 21 for appropriately controlling the entire main system, the AC frequency and AC power are input from the AC power detection unit 11, the DC current and DC voltage are input from the DC power detection unit 12, the water flow rate is input from the flow meter 13, an electrolyzer representative temperature is input from the water inlet thermometer 14, the electrolyzer thermometer 15, and the water outlet thermometer 16, a water outlet pressure is input from the water outlet pressure meter 17, and a hydrogen pressure is input from the hydrogen pressure meter 18. In response thereto, the power control command unit 21 calculates, on the basis of the input information, a range of power consumption that can instantaneously be changed by the electrolyzer, and issues, when detecting a frequency deviation, a command to change the power consumption within the range of upper and lower limits so as to cancel out the deviation to the rectifier 2.

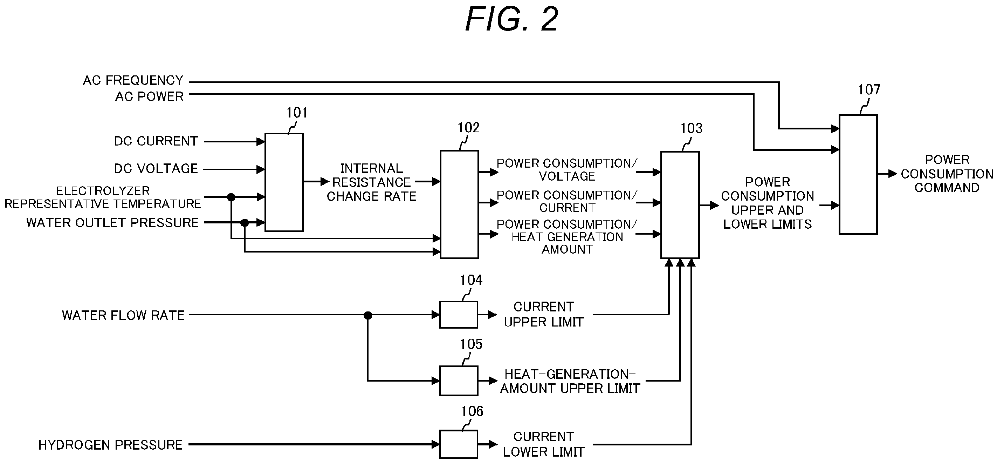

Fig. 2 illustrates a calculation method for the power consumption command in the power control command unit 21. The following is an extremely simple description of the calculation method for the power consumption command in Fig. 2, in which, for a water electrolysis system configured to include a rectifier that converts AC power of a power grid to DC power, an electrolyzer that performs water electrolysis with the DC power from the rectifier, a gas-liquid separator that performs gas-liquid separation of oxygen and hydrogen from a mixed fluid of oxygen and water from the electrolyzer, and a cooling system that supplies water to the electrolyzer, the rectifier is controlled so as to adjust power consumption according to a frequency of the power grid, while the power consumption is adjusted so as to fall within a limit range of the power consumption in the electrolyzer. In addition, the limit range of the power consumption is determined on the basis of the temperature of the electrolyzer, a deterioration rate thereof, and a water pressure in the electrolyzer outlet, determined on the basis of a current upper limit determined from a flow rate of supplied water, determined on the basis of a heat-generation-amount upper limit determined from the flow rate of the supplied water, or determined on the basis of a current lower limit determined from the hydrogen pressure.

Hereinbelow, a description will be given of a method for determining, for each factor, the limit range of the power consumption. First, the DC current, the DC voltage, the electrolyzer representative temperature, and the water outlet pressure are input to a deteriorated state calculation unit 101 and, from a database of initial electrolytic characteristics, a change rate of an internal resistance is calculated. The database of the initial electrolytic characteristics refers to a database containing ideal electrolytic characteristics (in the initial state) at a design stage of the electrolyzer to be used in the water electrolysis system or in a state where the electrolyzer is installed and an operation thereof is to be started and, in the database, a value of the internal resistance of the electrolyzer in the initial state is contained. The deteriorated state calculation unit 101 estimates a current internal resistance value from the input thereto, calculates the rate of change (internal resistance change rate) from the internal resistance value in the initial state as an index indicating the deteriorated state of the eletrolyzer, and outputs the change rate.

The internal resistance may also be represented as an equivalent circuit including not only one resistive component, but also a plurality of resistive components. In addition, the internal resistance change rate need not be calculated by using instantaneous data, and may also be calculated by using data in an operating state which allows easy diagnosis of an internal resistance change rate most recently occurred. Specifically, the data includes data at small values of the current, the voltage, and a temperature change rate, transient data when the output instantaneously fluctuates, and the like.

The calculated internal resistance change rate, the current electrolyzer representative temperature, and the outlet water pressure are input to the electrolytic characteristic calculation unit 102 and, through a comparison with the database of the initial electrolytic characteristics, a relationship among the voltage, the current, and the heat generation amount with respect to the power consumption is calculated. The relationship among the voltage, the current, and the heat generation amount can be calculated by using, e.g., Expression (1).

[Expression 1]

$$[\text{heat generation amount (W)}] = ([\text{voltage (V)}] - 1.48\,V \times [\text{the number of cells in electrolyzer}]) \times [\text{current (A)}] \qquad (1)$$

In addition, the water flow rate is input to the current upper limit calculation unit 104, and a current upper limit at the water flow rate is calculated. A relational expression between the water flow rate and the current upper limit differs depending on a water flow path structure of the electrolyzer or a detailed configuration of the electrolyzer, such as heat resistance and resistivity of an electrolytic cell material, and therefore calculation is performed on the basis of the database constructed by preliminarily testing the electrolyzer.

For example, when the volume ratio of oxygen increases downstream in the water flow path to increase the resistance as described above, the current consequently concentrates upstream in the water flow path to accelerate the deterioration. The current in the electrolyzer and an oxygen generation speed have a proportional relationship therebetween, and a relational expression as in Expression (2) shown below is satisfied, and therefore it is possible to calculate a current value at an upper limit oxygen volume ratio. The oxygen volume ratio in the outlet is preferably 80 % or less.

[Expression 2]

$$I = \alpha \ / \ (1-\alpha) \ \times \ FR_{H2O} \ / \ N \ \times \ F \ / \ 15 \ / \ Vm(T,P) \quad \ldots \ (2)$$

where, in the Expression (2), I is a current (A), $\alpha$ is an oxygen volume ratio, $FR_{H_2O}$ is a water flow rate (ml/min), N is the number of cells in the eletrolyzer, F is a Faraday constant (C/mol), Vm(T, P) is an oxygen molar volume (ml/mol) at a temperature T and under a pressure P.

In addition, the water flow rate is input to a heat-generation-amount upper limit calculation unit 105, and a heat-generation-amount upper limit at the water flow rate is calculated. A relational expression between the water flow rate and the heat-generation-amount upper limit differs depending on the water flow path structure of the electrolyzer or the detailed configuration of the electrolyzer, such as the heat resistance and resistivity of the electrolytic cell material, and therefore calculation is performed on the basis of a database constructed by preliminarily testing the electrolyzer.

For example, when the temperature increases downstream in the water flow path as described above, the resistance consequently decreases, and the current concentrates to accelerate the deterioration. When it is assumed that heat generated in the electrolyzer is absorbed by sensible heat of water, a relational expression as in Expression (3) shown below is satisfied, and therefore it is possible to calculate the heat generation amount at an upper-limit outlet-inlet temperature difference. The outlet-inlet temperature difference is preferably 10 °C or less, and more preferably 5 °C or less.

[Expression 3]

$$W = \Delta T \ \times \ FR_{H2O} \ / \ 60 \ \times \ C_{H2O} \ \times \ \rho_{H2O} \quad \ldots \ (3)$$

where, in the Expression (3), W is the heat generation amount (W), $\Delta T$ is the outlet-inlet temperature difference (K), $FR_{H_2O}$ is the water flow rate (ml/min), $C_{H_2O}$ is a specific heat of water (J/g/K), and $\rho_{H_2O}$ is a specific gravity of water (g/ml).

In addition, the hydrogen pressure is input to a current lower limit calculation unit 106, and the lower limit current is calculated. When the current becomes less than the lower limit, due to electrolysis, a rate of a speed at which hydrogen permeates the electrolytic cell to be diffused on an anode side to a speed of hydrogen generation in a cathode of the electrolytic cell increases to cause a decrease in electrolysis efficiency, deterioration due to due to reduction of an anode catalyst, and the like. A relationship between the hydrogen pressure and the lower limit current differs depending on the detailed configuration of the electrolyzer, such as a film thickness and a material of the electrolytic cell, and therefore calculation is performed on the basis of the database constructed by preliminarily testing the electrolyzer. Note that the electrolyzer preferably uses solid-polymer-type electrolytic cells.

The voltage, current, heat generation amount with respect to the power consumption, which have been calculated in the electrolytic characteristic calculation unit 102, and the current upper and lower limits and the heat-generation-amount upper limit in a current state of the water electrolysis system, which have been calculated in the current upper limit calculation unit 104, the heat-generation-amount upper limit calculation unit 105, and the current lower limit calculation unit 106, are input to a power consumption upper/lower limit calculation unit 103. Thus, power consumption upper and lower limits are set so as to meet, in addition to the upper and lower limits of the voltage, the current, the heat generation amount, and the power consumption of the water electrolysis system, the current upper and lower limits and the heat-generation-amount upper limit of the water electrolysis system in the current state.

The power consumption upper and lower limits calculated in the power consumption upper/lower limit calculation unit 103, and the AC frequency and the AC power in the current state are input to a power consumption command calculation unit 107, and the power consumption command is calculated to be output to the rectifier 2. Instead of the AC current in the current state, a command value or a plan value of the power consumption may also be used.

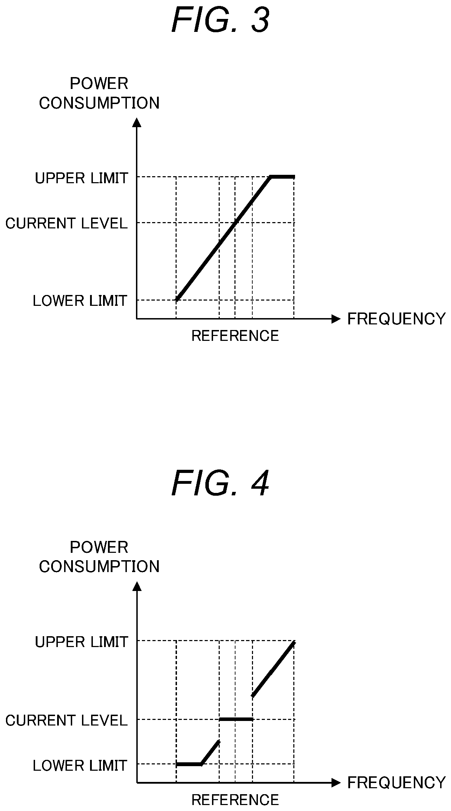

Fig. 3 and Fig. 4 illustrate an example of a command (ordinate axis) to set the power consumption according to the AC frequency (abscissa axis). As shown in Fig. 3, it may be possible to linearly change the power consumption with respect to deviation of the reference of the frequency or provide an interval in which the power consumption is not changed before and after the reference frequency, as shown in Fig. 4.

Alternatively, when the frequency deviation is large, it may be appropriate not to change the power consumption exceeding the upper limit or the lower limit of the power consumption.

According to the first embodiment of the present invention, the adjustment margin of the power consumption is determined in consideration of the flow rate of water to the electrolyzer, and therefore an abnormal temperature distribution or current distribution does not occur, and it becomes possible to suppress deterioration and breakdown of the electrolyzer.

**Second Embodiment**

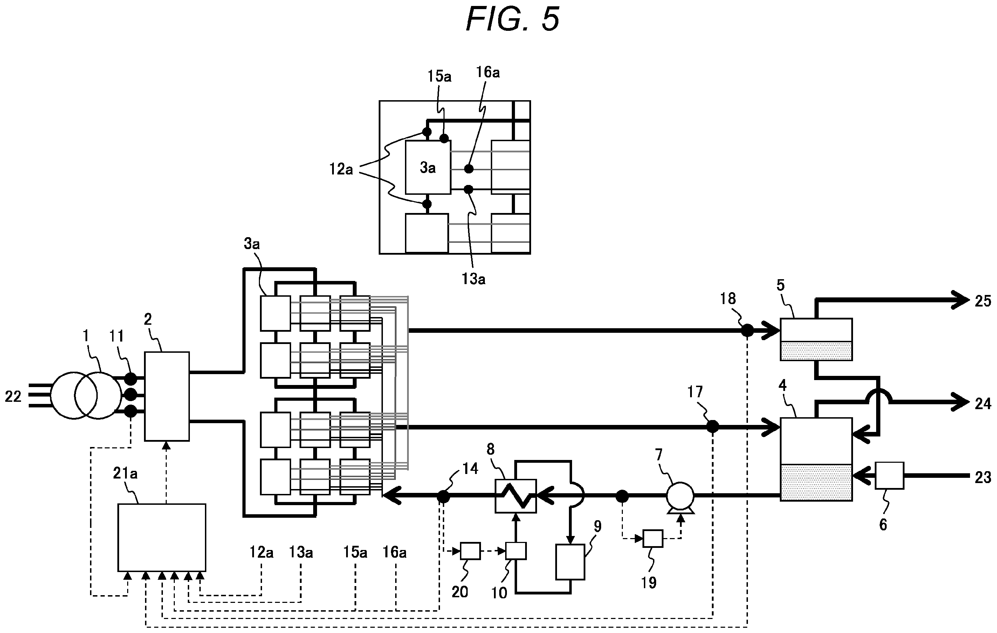

Fig. 5 illustrates an example of a water electrolysis system according to the second embodiment of the present invention. In the embodiment illustrated in Fig. 1, the description has been given using the example in which the electrolyzer 3 is one but, in the second embodiment, the electrolyzer 3 is configured to include a plurality of electrolyzers 3a.

Accordingly, the power supply system and the water supply system of the electrolyzer are configured to be connected in series and parallel. For example, the power supply system is connected to the rectifier 2 such that power supply lines for the plurality of electrolyzers 3a are electrically connected in series and parallel. Meanwhile, in the water supply system, pipes for supplying pure water, discharging oxygen and water, and discharging hydrogen and water to the plurality of electrolyzers 3a are connected in parallel to the individual electrolyzers 3a.

In addition, with the changing of the main circuit configuration, the control system has also been changed. Specifically, for example, a DC power detection unit 12a that detects a current and a voltage in each of the electrolyzers 3a, a flow meter 13a that detects a water flow rate to each of the electrolyzers 3a, an electrolyzer thermometer 15a that detects a temperature of each of the electrolyzers 3a, and a water outlet thermometer 16a that detects an outlet water temperature in each of the electrolyzers 3a are provided for each of the individual electrolyzers. Note that the illustration in FIG. 5 is for only one electrolyzer. To a power control command unit 21a, the DC currents, the DC voltages, the water flow rates, and the electrolyzer representative temperatures of all the electrolyzers 3a are input.

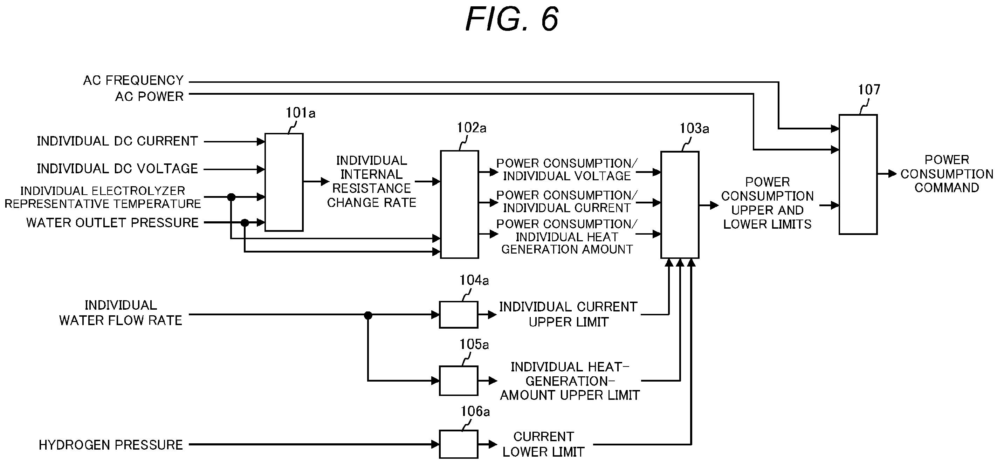

Fig. 6 illustrates a calculation method for a power consumption command in the power control command unit 21a. Processing in Fig. 6 is basically the same as processing in Fig. 2, but is different therefrom in that processing other than that in the power consumption command calculation unit 107 is determined individually for each of the electrolyzers. Up to 101a to 106a, the processing is performed individually for each of the electrolyzers, and the power consumption command calculation unit 107 uses the power consumption upper and lower limits determined individually to determine the power consumption command. Accordingly, the power consumption upper/lower limit calculation unit 103a sets the power consumption upper and lower limits so as to meet, in addition to the upper and lower limits of the voltage, the current, the heat generation amount, and the power consumption of the water electrolysis system, current upper and lower limits and a heat-generation-amount upper limit of each of the electrolyzers 3a in the current state.

To a deteriorated state calculation unit 101a, the DC current, the DC voltage, the electrolyzer representative temperature, and the water outlet pressure of each of the electrolyzers 3a are input and, from the database of the initial electrolytic characteristic, the change rate of the internal resistance of each of the electrolyzers 3a is calculated. For the internal resistance change rate, instantaneous data need not be used, and it may also be possible to calculate the internal resistance change rate by using data in an operating state which allows easy diagnosis of the internal resistance change rate most recently occurred.

The calculated internal resistance change rate of each of the electrolyzers 3a and the electrolyzer representative temperature and the water outlet water pressure of each of the electrolyzers 3a in the current state are input to the electrolytic characteristic calculation unit 102a and, through comparison with the database of the initial electrolytic characteristics, a relationship among the voltage, the current, and the heat generation amount of each of the electrolyzers 3a with respect to the system power consumption is calculated.

In addition, the water flow rate of each of the electrolyzers 3a is input to the current upper limit calculation unit 104a, and the current upper limit of each of the electrolyzers 3a at the water flow rate is calculated. Moreover, the water flow rate of each of the electrolyzers 3a is input to the heat-generation-amount upper limit calculation unit 105a, and the heat-generation-amount upper limit of each of the electrolyzers 3a at the water flow rate is calculated. Furthermore, the hydrogen pressure is input to the current lower limit calculation unit 106a, and a lower limit current is calculated.

The voltage, the current, and the heat generation amount of each of the electrolyzers 3a with respect to the system power consumption, which have been calculated by the electrolytic characteristic calculation unit 102a, and the current upper and lower limits of each of the electrolyzers 3a and the heat-generation-amount upper limit of each of the electrolyzers 3a of the water electrolysis system in the current state, which have been calculated by the current upper limit calculation unit 104a, the heat-generation-amount upper limit calculation unit 105a, and the current lower limit calculation unit 106a of each of the electrolyzers 3a, are input to the power consumption upper/lower limit calculation unit 103a, and power consumption upper and lower limits are calculated. The power consumption upper and lower limits are set so as to meet, in addition to the voltage, the upper and lower limits of the current, the heat generation amount, and the power consumption of the water electrolysis system, the current upper and lower limits and the heat-generation-amount upper limit of each of the electrolyzers 3a in the current state. The power consumption upper and lower limits calculated by the power consumption upper/lower limit calculation unit 103a and the AC frequency and the AC power in the current state are input to the power consumption command calculation unit 107, and the power consumption command is calculated and output to the rectifier 2.

It may also be possible to not only detect the AC frequency and adjust the power consumption in about several seconds, but also receive a command from a system administrator and adjust the power consumption in about several minutes to several tens of minutes. When the power consumption is adjusted in about several minutes to several tens of minutes, the power consumption adjustment can be followed by the adjustment of the water flow rate, and therefore it is not necessary to set conditions for the current and the heat generation amount at the water flow rate in the current state. Accordingly, the power consumption upper and lower limits differ from those when the power consumption is adjusted by detecting the AC frequency. In other words, it is possible to adjust the power consumption according to the frequency of the power grid and adjust the power consumption in response to the command to adjust the power consumption from the system administrator and, in addition, it is possible to set the adjustment range of the power consumption wider when the power consumption is adjusted in response to the command than when the power consumption is adjusted according to the frequency of the power grid.

The control in the second embodiment is intended to immediately change the control upon receiving a determination result from the input at the current time point, but the control can also be performed predictively. For example, in the case of a water electrolysis system in which electrolyzers are electrically connected in series and parallel, the system may also be configured such that a current and a voltage in each of the electrolyzers after the adjustment of the system power consumption are predicted from the temperature, deterioration rate, and a pressure of each of the electrolyzers, a power consumption upper-lower limit range in each of the electrolyzers is calculated from the predicted current and voltage and from a flow rate of supply water to each of the electrolyzers, and the power consumption is adjusted so as to meet the power consumption upper-lower limit ranges in all the electrolyzers.

As the temperature and the voltage are higher, deterioration of an electrolyzer is accelerated to reduce the lifespan of the electrolyzer, resulting in increased equipment cost. Therefore, it is desirable to set the upper limit of the power consumption in consideration of cost for the reduced lifespan due to the increased power consumption and profit from providing an adjustment amount. Even when the power consumption is the same, when the degree of deterioration of the electrolyzer is high or when the temperature thereof is low and the resistance thereof is high, the voltage becomes high to further accelerate the deterioration. In addition, the deterioration speed also differs depending on the configuration of the electrolyzer. It may be appropriate to set the power consumption upper limit in a preliminary test on the basis of the database of a relationship between operating conditions for the electrolyzer and a deterioration speed.

**Third Embodiment**

In the third embodiment, a description will be given of specific settings and operation examples. It is assumed herein that a water electrolysis system has the configuration shown in Fig. 1. The electrolyzer 3 in which 224 electrolytic cells each having an electrode area of 2000 $cm^2$ were mounted was used. The water temperature control unit 20 was set such that the electrolyzer inlet temperature of pure water was 60 °C, and the water outlet pressure and the hydrogen pressure were controlled to be 0.1 MpaG and 0.9 MpaG, respectively.

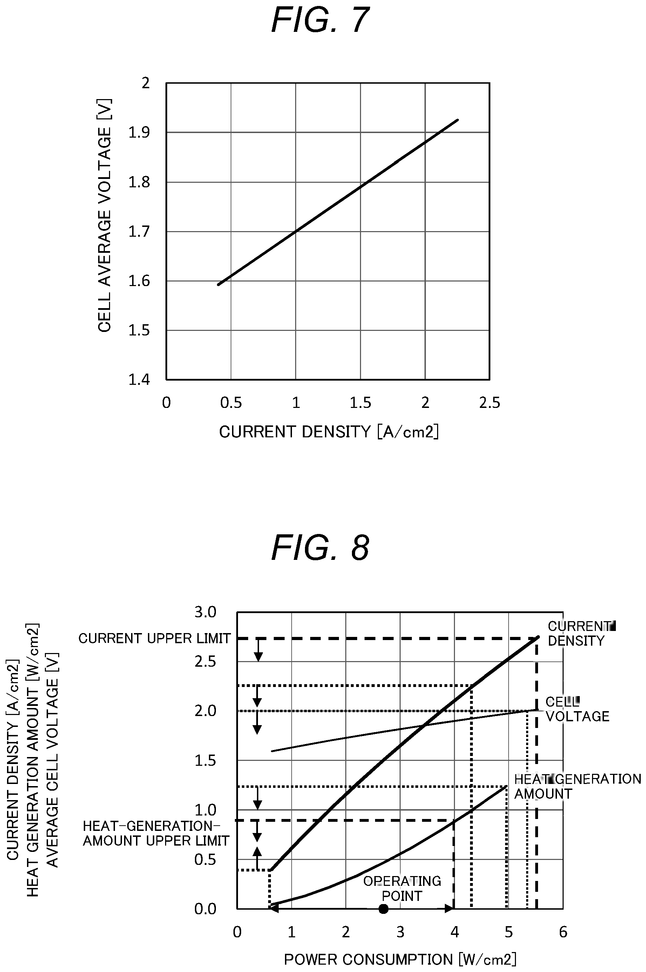

Fig. 7 shows a current-voltage characteristic of the electrolyzer that had been calculated on the basis of the internal resistance change rate calculated by the deteriorated state calculation unit 101. In Fig. 7, the abscissa axis represents a current density ($A/cm^2$), and the ordinate axis represents a cell average voltage (V) and, according to this characteristic, in a current density region (0.5 to 2.0) of an operating range, the voltage had a linear relationship with the current.

In the present embodiment, the lower limit current density, the upper limit current density, the upper heat generation amount, and the upper cell voltage of the system are respectively set to 0.4 A/cm$^2$, 2.25 A/cm$^2$, 1.25 W/cm$^2$, and 1.95 V. The current upper limit calculation unit 104 sets the current upper limit such that the oxygen volume ratio is 70 % or less, while the heat-generation-amount upper limit calculation unit 105 sets the heat-generation-amount upper limit such that the outlet-inlet temperature difference is 5 °C or less.

Fig. 8 is a diagram showing the relationships between the power consumption represented by the abscissa axis and the current density, the heat generation amount, and the cell voltage each represented by the ordinate axis, which shows the relationships between the power consumption and the current density, the heat generation amount, and the cell voltage when an operation was performed at 3000 A (1.5 A/cm$^2$), 401 V (1.79 V/cell), and 1.20 MW (2.69 W/cm$^2$) in a state where pure water was supplied at a flow rate of 1.12 m$^3$/min.

According to this, on the basis of a pure water flow rate, the current upper limit was calculated to be 5450 A (2.73 A/cm$^2$), and the heat-generation-amount upper limit was calculated to be 0.392 MW (0.875 W/cm$^2$). As a result, as the power consumption upper limit in the power consumption adjustment according to the AC frequency, 1.78 MW (3.98 W/cm$^2$) was set under the limit of the heat-generation-amount upper limit. Meanwhile, as the power consumption upper limit in the power consumption adjustment responding to the command from the system administrator, 1.94 MW (4.33 W/cm$^2$) was set under the limit of the system upper limit current density.

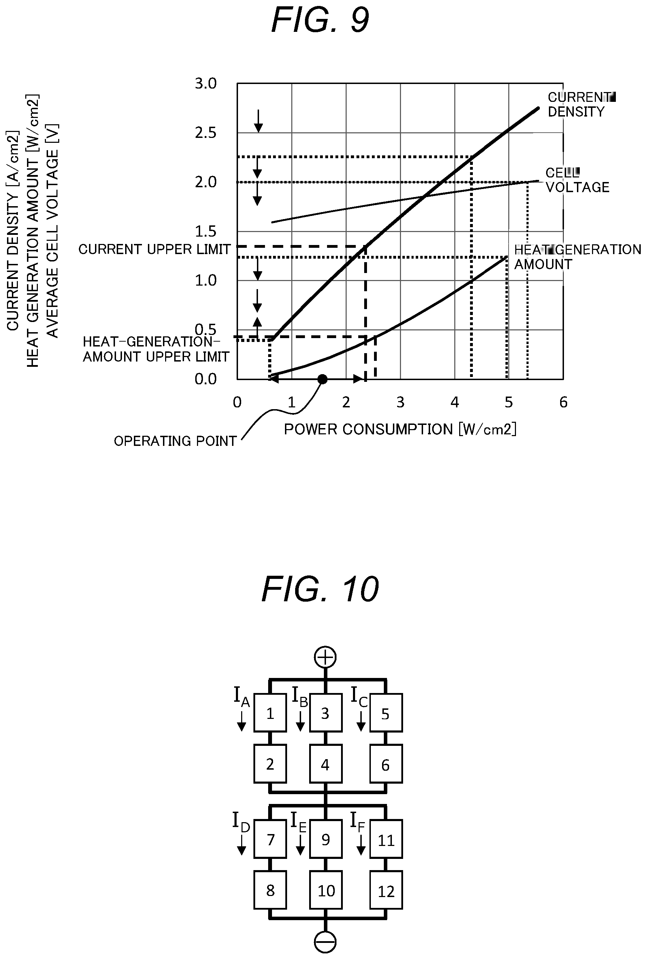

Fig. 9 is also a diagram showing the relationships between the power consumption represented by the abscissa axis and the current density, the heat generation amount, and the cell voltage each represented by the ordinate axis, which shows the relationships between the power consumption and the current density, the heat generation amount, and the cell voltage when an operation was performed at 2000 A (1.0 A/cm$^2$), 381 V (1.70 V/cell), and 0.76 MW (1.70 W/cm$^2$) in a state where pure water was supplied at a flow rate of 0.54 m$^3$/min.

According to this, the current upper limit was calculated to be 2616 A (1.31 A/cm$^2$), while the heat-generation-amount upper limit was calculated to be 0.188 MW (0.42 W/cm$^2$). As a result, as the power consumption upper limit in the power consumption adjustment according to the AC frequency, 1.03 MW (2.30 W/cm$^2$) was set on the basis of the current upper limit. Meanwhile, as the power consumption upper limit in the power consumption adjustment responding to the command from the system administrator, 1.94 MW (4.33 W/cm$^2$) was set under the limit of the system upper limit current density.

According to the verification in the third embodiment, the power consumption adjustment range was set in accordance with the water flow rate in the power consumption adjustment performed in several seconds, which was difficult to be followed by a water flow rate change, and therefore the deterioration could successfully be suppressed without incurring extreme current concentration.

**Fourth Embodiment**

In the fourth embodiment also, a description will be given of specific setting/operation examples. It is assumed herein that a water electrolysis system has the configuration shown in Fig. 5. The electrolyzers 3 in each of which 320 electrolytic cells each having an electrode area of 700 cm$^2$ were mounted were used, and twelve electrolyzers 3a were electrically connected in series and parallel.

Fig. 10 illustrates an electric connection circuit and the electrolyzer numbers of the electrolyzers 3a. The twelve electrolyzers 3a were used. It is assumed herein that currents flowing in the individual electrolyzers 3a are denoted by IA to IF.

In this example in the foregoing configuration, the water temperature control unit 20 was set such that the electrolyzer inlet temperature of pure water was 60 °C, the water outlet pressure was controlled to be 0.1 MpaG, and the hydrogen pressure was controlled to be 0.9 MpaG.

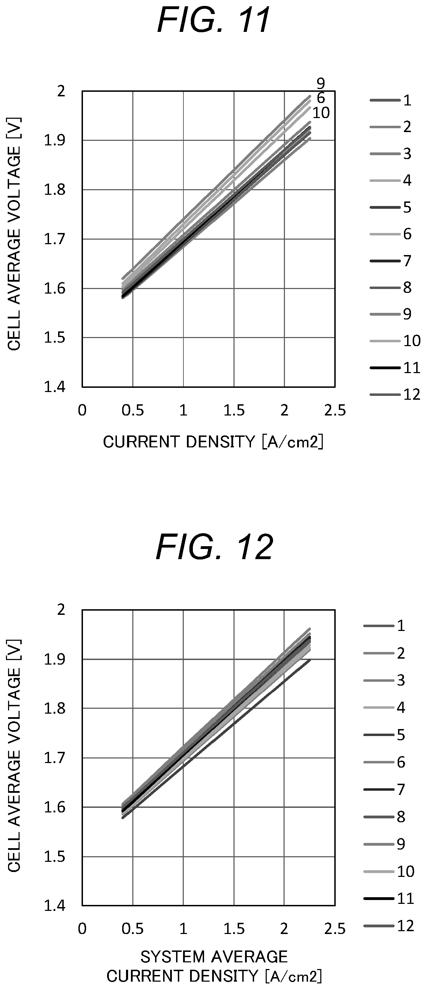

Fig. 11 shows a current-voltage characteristic of each of the electrolyzers 3a that has been calculated on the basis of the internal resistance change rate calculated by the deteriorated state calculation unit 101a. In Fig. 11, the abscissa axis represents the current density, while the ordinate axis represents a cell average voltage, and the characteristic is shown for each of the twelve electrolyzers. In this case, the electrolyzer numbers 9, 6, and 10 exhibited resistances higher than the other electrolyzers.

Fig. 12, Fig. 13, and Fig. 14 are diagrams illustrating the relationships between the system current density (abscissa axis) calculated by the electrolytic characteristic calculation unit 102a on the basis of the current-voltage characteristic of each of the electrolyzers 3a and the cell voltage, the current, and the heat generation amount of each of the electrolyzers 3a.

In the relationship between the system current density (abscissa axis) and the cell voltage (ordinate) of each of the electrolyzers 3a, as illustrated in Fig. 12, the electrolyzer numbers 9, 6, and 10 did not exhibit voltages higher than those of the other electrolyzers with respect to the current in the system.

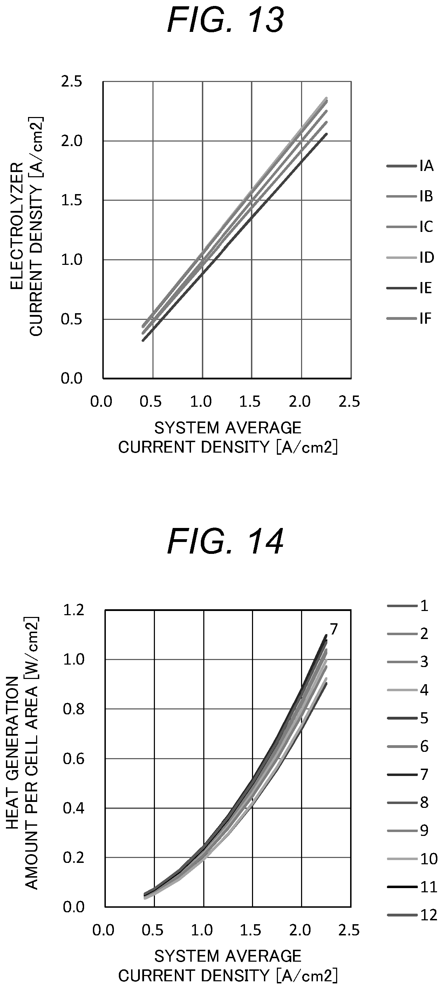

This is because a current IC of the electrolyzer number 6 and currents IE of the electrolyzer numbers 9 and 10 are smaller than those in the other electrolyzers, as shown in Fig. 13 showing the relationship between the system current density (abscissa) and the current (ordinate: electrolyzer current density) of each of the electrolyzers 3a.

Meanwhile, in the relationship between the system current density (abscissa axis) and the heat generation amount (ordinate axis: heat generation amount per cell area) of each of the electrolyzers 3a, as shown in Fig. 14, the heat generation amounts of the electrolyzer numbers 9, 6, and 10 were equal to those of the other electrolyzers, and the electrolyzer number 7 exhibited the largest heat generation amount with respect to the current in the system.

In the present embodiment, the lower limit current density, the upper limit current density, the upper limit heat generation amount, and the upper limit cell voltage of each of the electrolyzers 3a were respectively set to 0.4 A/cm$^2$, 2.25 A/cm$^2$, 1.25 W/cm$^2$, and 1.95 V, the current upper limit calculation unit 104a set the current upper limit such that the oxygen volume ratio was 70 % or less, and the heat-generation-amount upper limit calculation unit 105a set the heat-generation-amount upper limit such that the outlet-inlet temperature difference was 5 °C or less.

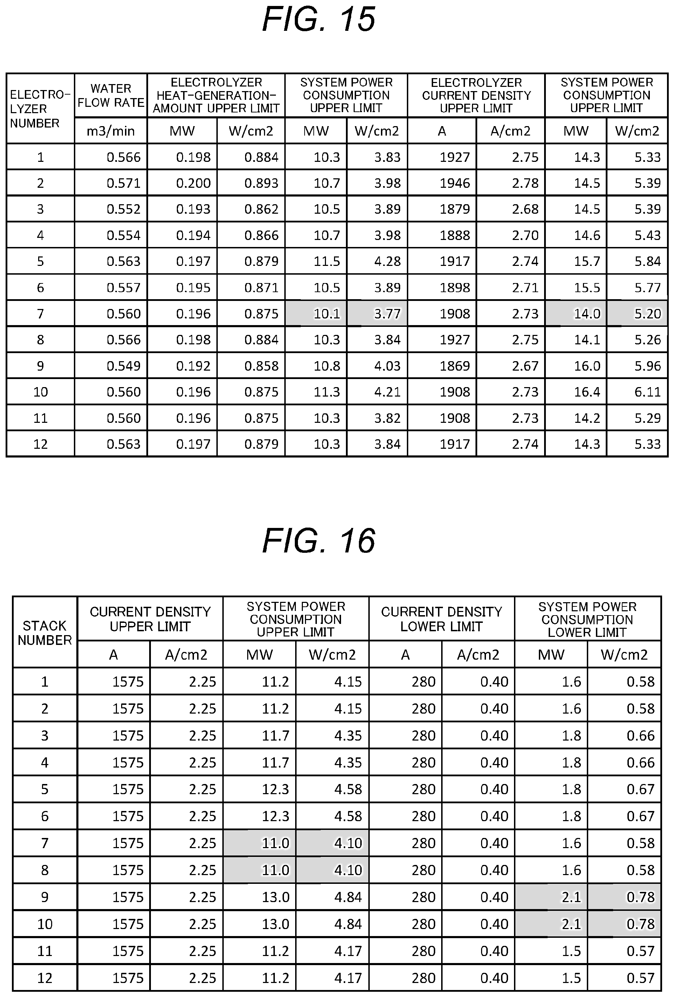

In the fourth embodiment, in a state where pure water was supplied at a flow rate of 6.72 m$^3$/min, an operation was performed at 3150 A (1.5 A/cm$^2$), 2300 V (1.80 V/cell), and 7.24 MW (2.70 W/cm$^2$). Fig. 15 illustrates the water flow rate in each of the electrolyzers at that time, the heat-generation-amount upper limit and the current density upper limit of the electrolyzer 3a that had been calculated by the current upper limit calculation unit 104a and the heat-generation-amount upper limit calculation unit 105a, and the system power consumption upper and lower limits corresponding thereto.

According to Fig. 15, pure water was evenly supplied to the individual electrolyzers, and no significant difference was observed between the heat-generation-amount upper limits of the individual electrolyzers and between the current density upper limits thereof. However, a difference was observed between the corresponding system power consumptions, and the system power consumption upper limit corresponding to the heat-generation-amount upper limit of the electrolyzer number 7, which tended to be higher in power consumption, had a lowest value. On the basis of this result, as the power consumption upper limit in the power consumption adjustment according to the AC frequency, 10.1 MW (3.77 W/cm$^2$) was set.

Fig. 16 illustrates the current density upper and lower limit of the electrolyzer, the system power consumption corresponding thereto, and the like. On the basis of the result in Fig. 16, the upper and lower limits in the power consumption adjustment responding to the command from the system administrator were set to 2.1 MW (0.78 W/cm$^2$) to 11.0 MW (4.1 W/cm$^2$) .

In addition, in the fourth embodiment, in a state where pure water was supplied at a flow rate of 3.23 m$^3$/min, an operation was performed at 2100 A (1.0 A/cm$^2$), 2182 V (1.70 V/cell), and 7.24 MW (1.70 W/cm$^2$).

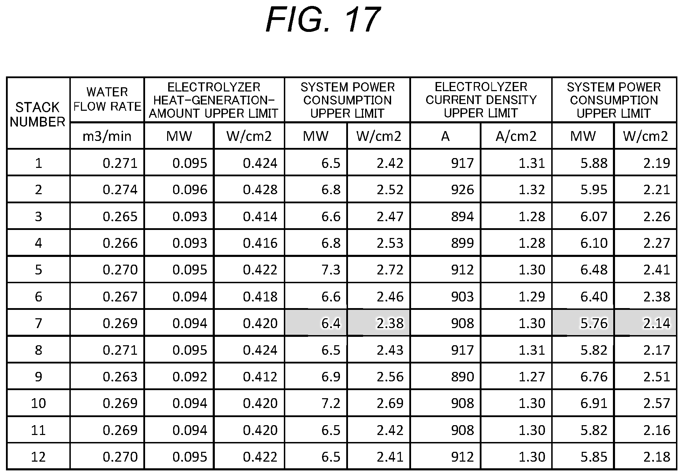

Fig. 17 illustrates the water flow rate in each of the electrolyzers at that time, the heat-generation-amount upper limit and the current density upper limit of the electrolyzer 3a that had been calculated by the current upper limit calculation unit 104a and the heat-generation-amount upper limit calculation unit 105a, and the system power consumption corresponding thereto. The system power consumption corresponding to the current density upper limit of the electrolyzer number 7, which was 5.76 NM (2.14 W/cm$^2$), had a smallest value, and was set as the power consumption upper limit in the power consumption adjustment according to the AC frequency.

According to the verification in the fourth embodiment, the power consumption adjustment range in accordance with the water flow rate and the current distribution was set, and therefore the deterioration could successfully be suppressed without incurring extreme current concentration.

Reference Signs List

1:  insulation transformer
2:  rectifier
3:  electrolyzer
4:  oxygen-side gas-liquid separator
5:  hydrogen-side gas-liquid separator
6:  pure water production device
7:  pump
8:  heat exchanger
9:  cooler
10:  cooling water adjustment valve
11:  AC power detection unit
12:  DC power detection unit
12:  flow meter
14:  water inlet thermometer

15: electrolyzer thermometer
16: water outlet thermometer
17: water outlet pressure meter
18: hydrogen pressure meter
19: water flow rate control unit
20: water temperature control unit
21: power control command unit
22: grid power
23: water
24: oxygen
25: hydrogen

**Claims**

1. A water electrolysis system comprising:

   a rectifier that converts an AC power from a power grid to a DC power;
   an electrolyzer that performs a water electrolysis with the DC power from the rectifier;
   a gas-liquid separator that separates the oxygen and the hydrogen from a mixed fluid of oxygen and water from the electrolyzer; and
   a cooling system that supplies water to the electrolyzer,
   wherein the rectifier is controlled so as to adjust a power consumption according to a frequency of the power grid, and the power consumption is adjusted so as to fall within a limit range of the power consumption in the electrolyzer, and
   wherein the limit range of the power consumption is determined on the basis of a temperature of the electrolyzer, a deterioration rate thereof, a water pressure in an electrolyzer outlet, and a flow rate of a supply water.

2. The water electrolysis system according to claim 1,
   wherein the limit range of the power consumption is determined on the basis of a heat-generation-amount upper limit determined on the basis of the flow rate of the supply water.

3. The water electrolysis system according to claim 1,
   wherein the limit range of the power consumption is determined on the basis of a current lower limit determined on the basis of a hydrogen pressure.

4. The water electrolysis system according to claim 1,
   wherein a power consumption upper-lower limit range is calculated such that a volume ratio of a gas phase in a water flow path outlet of the electrolyzer is 80 % or less.

5. The water electrolysis system according to claim 1,
   wherein a power consumption upper-lower limit range is calculated such that a water outlet-inlet temperature difference of the electrolyzer is 10 °C or less.

6. The water electrolysis system according to claim 1,
   wherein the electrolyzer uses a solid-polymer-type electrolytic cell.

7. The water electrolysis system according to claim 1,
   wherein the electrolyzer includes a plurality of the electrolyzers which are electrically connected in series and parallel to be supplied with the power.

8. The water electrolysis system according to claim 7,
   wherein a current and a voltage in each of the electrolyzers after system power consumption adjustment are predicted from a temperature, a deterioration rate, and a pressure of each of the plurality of electrolyzers, a power consumption upper-lower limit range in each of the electrolyzers is calculated on the basis of the predicted current and voltage and the flow rate of the supply water to each of the electrolyzers, and the power consumption is adjusted so as to meet the power consumption upper-lower limit range of all of the electrolyzers.

9. The water electrolysis system according to claim 1,

wherein the power consumption is adjusted according to the frequency of the power grid, a command to adjust the power consumption is received from a system administrator to allow the power consumption to be adjusted, and an adjustment range of the power consumption is wider when the power consumption is adjusted by receiving the command than when the power consumption is adjusted according to the frequency of the power grid.

10. A water electrolysis system control device comprising:

a rectifier that converts an AC power from a power grid to a DC power;
an electrolyzer that performs a water electrolysis with the DC power from the rectifier;
a gas-liquid separator that separates the oxygen and hydrogen from a mixed fluid of oxygen and water from the electrolyzer; and
a cooling system that supplies water to the electrolyzer,
wherein the water electrolysis system control device controls the rectifier so as to adjust power consumption according to a frequency of the power grid, and the power consumption is adjusted so as to fall within a limit range of the power consumption in the electrolyzer, and
wherein the limit range of the power consumption is determined on the basis of a temperature of the electrolyzer, a deterioration rate thereof, a water pressure in an electrolyzer outlet, and a flow rate of a supply water.

*FIG. 1*

# FIG. 2

## FIG. 3

## FIG. 4

*FIG. 5*

EP 4 768 634 A1

## FIG. 6

AC FREQUENCY

AC POWER

INDIVIDUAL DC CURRENT

INDIVIDUAL DC VOLTAGE

INDIVIDUAL ELECTROLYZER REPRESENTATIVE TEMPERATURE

WATER OUTLET PRESSURE

101a

INDIVIDUAL INTERNAL RESISTANCE CHANGE RATE

102a

POWER CONSUMPTION/ INDIVIDUAL VOLTAGE

POWER CONSUMPTION/ INDIVIDUAL CURRENT

POWER CONSUMPTION/ INDIVIDUAL HEAT GENERATION AMOUNT

103a

POWER CONSUMPTION UPPER AND LOWER LIMITS

107

POWER CONSUMPTION COMMAND

INDIVIDUAL WATER FLOW RATE

104a

INDIVIDUAL CURRENT UPPER LIMIT

105a

INDIVIDUAL HEAT-GENERATION-AMOUNT UPPER LIMIT

HYDROGEN PRESSURE

106a

CURRENT LOWER LIMIT

EP 4 768 634 A1

## FIG. 7

## FIG. 8

## FIG. 9

## FIG. 10

## FIG. 11

## FIG. 12

## FIG. 13

## FIG. 14

# FIG. 15

| ELECTRO-LYZER NUMBER | WATER FLOW RATE | ELECTROLYZER HEAT-GENERATION-AMOUNT UPPER LIMIT | | SYSTEM POWER CONSUMPTION UPPER LIMIT | | ELECTROLYZER CURRENT DENSITY UPPER LIMIT | | SYSTEM POWER CONSUMPTION UPPER LIMIT | |
|---|---|---|---|---|---|---|---|---|---|
| | m3/min | MW | W/cm2 | MW | W/cm2 | A | A/cm2 | MW | W/cm2 |
| 1 | 0.566 | 0.198 | 0.884 | 10.3 | 3.83 | 1927 | 2.75 | 14.3 | 5.33 |
| 2 | 0.571 | 0.200 | 0.893 | 10.7 | 3.98 | 1946 | 2.78 | 14.5 | 5.39 |
| 3 | 0.552 | 0.193 | 0.862 | 10.5 | 3.89 | 1879 | 2.68 | 14.5 | 5.39 |
| 4 | 0.554 | 0.194 | 0.866 | 10.7 | 3.98 | 1888 | 2.70 | 14.6 | 5.43 |
| 5 | 0.563 | 0.197 | 0.879 | 11.5 | 4.28 | 1917 | 2.74 | 15.7 | 5.84 |
| 6 | 0.557 | 0.195 | 0.871 | 10.5 | 3.89 | 1898 | 2.71 | 15.5 | 5.77 |
| 7 | 0.560 | 0.196 | 0.875 | 10.1 | 3.77 | 1908 | 2.73 | 14.0 | 5.20 |
| 8 | 0.566 | 0.198 | 0.884 | 10.3 | 3.84 | 1927 | 2.75 | 14.1 | 5.26 |
| 9 | 0.549 | 0.192 | 0.858 | 10.8 | 4.03 | 1869 | 2.67 | 16.0 | 5.96 |
| 10 | 0.560 | 0.196 | 0.875 | 11.3 | 4.21 | 1908 | 2.73 | 16.4 | 6.11 |
| 11 | 0.560 | 0.196 | 0.875 | 10.3 | 3.82 | 1908 | 2.73 | 14.2 | 5.29 |
| 12 | 0.563 | 0.197 | 0.879 | 10.3 | 3.84 | 1917 | 2.74 | 14.3 | 5.33 |

# FIG. 16

| STACK NUMBER | CURRENT DENSITY UPPER LIMIT | | SYSTEM POWER CONSUMPTION UPPER LIMIT | | CURRENT DENSITY LOWER LIMIT | | SYSTEM POWER CONSUMPTION LOWER LIMIT | |
|---|---|---|---|---|---|---|---|---|
| | A | A/cm2 | MW | W/cm2 | A | A/cm2 | MW | W/cm2 |
| 1 | 1575 | 2.25 | 11.2 | 4.15 | 280 | 0.40 | 1.6 | 0.58 |
| 2 | 1575 | 2.25 | 11.2 | 4.15 | 280 | 0.40 | 1.6 | 0.58 |
| 3 | 1575 | 2.25 | 11.7 | 4.35 | 280 | 0.40 | 1.8 | 0.66 |
| 4 | 1575 | 2.25 | 11.7 | 4.35 | 280 | 0.40 | 1.8 | 0.66 |
| 5 | 1575 | 2.25 | 12.3 | 4.58 | 280 | 0.40 | 1.8 | 0.67 |
| 6 | 1575 | 2.25 | 12.3 | 4.58 | 280 | 0.40 | 1.8 | 0.67 |
| 7 | 1575 | 2.25 | 11.0 | 4.10 | 280 | 0.40 | 1.6 | 0.58 |
| 8 | 1575 | 2.25 | 11.0 | 4.10 | 280 | 0.40 | 1.6 | 0.58 |
| 9 | 1575 | 2.25 | 13.0 | 4.84 | 280 | 0.40 | 2.1 | 0.78 |
| 10 | 1575 | 2.25 | 13.0 | 4.84 | 280 | 0.40 | 2.1 | 0.78 |
| 11 | 1575 | 2.25 | 11.2 | 4.17 | 280 | 0.40 | 1.5 | 0.57 |
| 12 | 1575 | 2.25 | 11.2 | 4.17 | 280 | 0.40 | 1.5 | 0.57 |

# FIG. 17

| STACK NUMBER | WATER FLOW RATE | ELECTROLYZER HEAT-GENERATION-AMOUNT UPPER LIMIT | | SYSTEM POWER CONSUMPTION UPPER LIMIT | | ELECTROLYZER CURRENT DENSITY UPPER LIMIT | | SYSTEM POWER CONSUMPTION UPPER LIMIT | |
|---|---|---|---|---|---|---|---|---|---|
| | m3/min | MW | W/cm2 | MW | W/cm2 | A | A/cm2 | MW | W/cm2 |
| 1 | 0.271 | 0.095 | 0.424 | 6.5 | 2.42 | 917 | 1.31 | 5.88 | 2.19 |
| 2 | 0.274 | 0.096 | 0.428 | 6.8 | 2.52 | 926 | 1.32 | 5.95 | 2.21 |
| 3 | 0.265 | 0.093 | 0.414 | 6.6 | 2.47 | 894 | 1.28 | 6.07 | 2.26 |
| 4 | 0.266 | 0.093 | 0.416 | 6.8 | 2.53 | 899 | 1.28 | 6.10 | 2.27 |
| 5 | 0.270 | 0.095 | 0.422 | 7.3 | 2.72 | 912 | 1.30 | 6.48 | 2.41 |
| 6 | 0.267 | 0.094 | 0.418 | 6.6 | 2.46 | 903 | 1.29 | 6.40 | 2.38 |
| 7 | 0.269 | 0.094 | 0.420 | 6.4 | 2.38 | 908 | 1.30 | 5.76 | 2.14 |
| 8 | 0.271 | 0.095 | 0.424 | 6.5 | 2.43 | 917 | 1.31 | 5.82 | 2.17 |
| 9 | 0.263 | 0.092 | 0.412 | 6.9 | 2.56 | 890 | 1.27 | 6.76 | 2.51 |
| 10 | 0.269 | 0.094 | 0.420 | 7.2 | 2.69 | 908 | 1.30 | 6.91 | 2.57 |
| 11 | 0.269 | 0.094 | 0.420 | 6.5 | 2.42 | 908 | 1.30 | 5.82 | 2.16 |
| 12 | 0.270 | 0.095 | 0.422 | 6.5 | 2.41 | 912 | 1.30 | 5.85 | 2.18 |

## INTERNATIONAL SEARCH REPORT

| International application No. |
| --- |
| **PCT/JP2024/022390** |

### A. CLASSIFICATION OF SUBJECT MATTER

*C25B 15/02*(2021.01)i; *C01B 3/02*(2006.01)i; *C25B 1/04*(2021.01)i; *C25B 9/00*(2021.01)i; *C25B 9/70*(2021.01)i;
*H02J 3/14*(2006.01)i; *H02J 3/24*(2006.01)i; *H02J 3/28*(2006.01)i; *H02J 15/00*(2006.01)i
FI:   C25B15/02; C01B3/02 H; C25B1/04; C25B9/00 A; C25B9/70; H02J3/14; H02J3/24; H02J3/28; H02J15/00 G

According to International Patent Classification (IPC) or to both national classification and IPC

### B. FIELDS SEARCHED

Minimum documentation searched (classification system followed by classification symbols)

C25B15/02; C01B3/02; C25B1/04; C25B9/00; C25B9/70; H02J3/14; H02J3/24; H02J3/28; H02J15/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2019-183259 A (PANASONIC INTELLECTUAL PROPERTY MANAGEMENT CO., LTD.) 24 October 2019 (2019-10-24) claims 1-2, paragraphs [0027], [0048] | 1, 3, 6-7, 10 |
| A | entire text | 2, 4-5, 8-9 |
| Y | JP 2018-193573 A (KABUSHIKI KAISHA TOSHIBA) 06 December 2018 (2018-12-06) fig. 3 | 1, 3, 6-7, 10 |
| Y | WO 2018/182004 A1 (ASAHI KASEI KABUSHIKI KAISHA) 04 October 2018 (2018-10-04) paragraphs [0006]-[0007] | 1, 3, 6-7, 10 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **23 August 2024** | **10 September 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

INTERNATIONAL SEARCH REPORT
Information on patent family members

International application No.

**PCT/JP2024/022390**

| Patent document cited in search report | | | Publication date (day/month/year) | Patent family member(s) | | | Publication date (day/month/year) |
|---|---|---|---|---|---|---|---|
| JP | 2019-183259 | A | 24 October 2019 | US | 2019/0311890 | A1 | |
| | | | | claims 1-2, paragraphs [0035], [0056] | | | |
| | | | | EP | 3550056 | A1 | |
| | | | | CN | 110344072 | A | |
| JP | 2018-193573 | A | 06 December 2018 | (Family: none) | | | |
| WO | 2018/182004 | A1 | 04 October 2018 | EP | 3604621 | A1 | |
| | | | | paragraphs [0006]-[0007] | | | |

Form PCT/ISA/210 (patent family annex) (July 2022)

**REFERENCES CITED IN THE DESCRIPTION**

**Patent documents cited in the description**

- JP 2011050138 A

- JP 2021134863 A